# EUROPÄISCHE PATENTSCHRIFT

(11) **EP 2 493 638 B1**
(45) Veröffentlichungstag und Bekanntmachung des Hinweises auf die Patenterteilung: **05.07.2017**
(21) Anmeldenummer: 10768373.2
(22) Anmeldetag: 26.08.2010
(51) Int. Cl.: B21C 37/12, B23K 9/032

(54) **VERFAHREN ZUR HERSTELLUNG GESCHWEISSTER SCHRAUBENNAHTROHRE MIT OPTIMIERTER ROHRGEOMETRIE**
METHOD FOR PRODUCING WELDED HELICAL-SEAM TUBES HAVING OPTIMIZED TUBE GEOMETRY
PROCÉDÉ DE PRODUCTION DE TUBES SOUDÉS À JONCTIONS HÉLICOÏDALES, À GÉOMÉTRIE DE TUBE OPTIMISÉE

(30) Priorität: 28.10.2009 DE 102009051695
(43) Veröffentlichungstag der Anmeldung: 05.09.2012
(73) Patentinhaber: Salzgitter Mannesmann Grossrohr GmbH, 38239 Salzgitter (DE)
(72) Erfinder: HOLSTE, Carsten, 38642 Goslar (DE); KNOOP, Franz Martin, 38690 Vienenburg (DE)
(74) Vertreter: Meissner, Peter E.
(86) Internationale Anmeldenummer: PCT/DE2010/001029
(87) Internationale Veröffentlichungsnummer: WO 2011/050764

(56) Entgegenhaltungen:
- DE-A1-102004 058 092
- GB-A- 1 340 245
- GB-A- 2 027 373
- US-A- 3 739 134
- US-A1- 2007 245 789

## Beschreibung

Die Erfindung betrifft ein Verfahren zur Herstellung geschweißter Schraubennahtrohre mit optimierter Rohrgeometrie, gemäß dem Oberbegriff des Patentanspruchs 1. Des Weiteren betrifft die Erfindung eine Einrichtung zur Durchführung des Verfahrens nach dem Oberbegriff des Anspruchs 8 (siehe z.B. US-A-3,739,134). Für den Transport von Wasser, Öl und Gas werden im Regelfall unterpulvergeschweißte Schraubennahtrohre, auch Spiralrohre genannt, eingesetzt, welche vorzugsweise aus Warmbreitband (Coils) oder aus Stahlblech hergestellt werden.

Aus der Broschüre "Spiralgeschweißte Großrohre - Produktinformationen -" (Salzgitter Mannesmann Großrohr 3/08) ist es bekannt, das Warmband in einer Einformeinrichtung schraubenlinienförmig zu einem Schlitzrohr zu formen und in einem zweistufigen Verfahren zu einem Rohr zu verschweißen.

Hierzu wird das Warmband in einer Verformungseinheit einer Rohrformmaschine zu einem Rohr geformt. Die Verformungseinheit besteht aus einem 3-Rollenbalken-Biegesystem mit einem äußeren Rollenstützkäfig und einer sogenannten Versatzrolle. Mit der höheneinstellbaren Versatzrolle kann ein etwaiger Bandkantenversatz des Schlitzrohres ausgeglichen werden.

Der Rohrdurchmesser wird beeinflusst vom Einlaufwinkel des Bandes in die Verformungseinheit und von der Bandbreite des eingesetzten Vormaterials. Mittels der höheneinstellbaren Versatzrolle kann ebenfalls auf den Durchmesser des Rohres Einfluss genommen werden.

In diesem als "HTS-Verfahren" bekannten Fertigungsprozess werden in einem ersten Verfahrensschritt die Bandkanten des Schlitzrohrs mittels einer Schutzgas-Heftschweißung bei hoher Schweißgeschwindigkeit von bis zu 15m/min verschweißt, wobei die Bandkanten dabei nur zum Teil miteinander verbunden werden.

Das Fertigschweißen mit einer vollständigen Verschweißung der Bandkanten mit einer Innen- und Außennaht erfolgt anschließend in einem zweiten Schritt auf separaten Schweißständen mittels Unterpulverschweißen.

Der Vorteil gegenüber dem konventionellen einstufigen Verfahren, bei dem direkt in der Rohrformmaschine auch die Unterpulverschweißnähte ausgeführt werden und das Rohr somit in einem Schritt fertig geschweißt wird, besteht darin, dass durch die hohe Geschwindigkeit bei der Heftnahtschweißung eine höhere Leistung der Rohreinformmaschine erreicht wird.

Des Weiteren wird die erzeugte Rohrgeometrie in der Rohrformmaschine nicht negativ durch den UP-(Unterpulver)-Schweißprozess beeinflusst, und damit die Einhaltung vorgegebener Toleranzwerte verbessert.

Ständig steigende Anforderungen an einzuhaltende Durchmesser-Toleranzen verursachen einen hohen Aufwand, um den Rohrdurchmesser exakt zu ermitteln und gegebenenfalls notwendige Korrekturen der beeinflussenden Parameter vorzunehmen.

Abweichungen des Rohrdurchmessers von den vorgegebenen Toleranzen können z. B. durch Abweichungen der Bandbreite und/oder der Festigkeit und Dehnung des eingesetzten Werkstoffes hervorgerufen werden. Diese Veränderungen wirken sich auf den Einformvorgang und damit auf die Geometrie des Rohres aus.

Um auf den Durchmesser des geschweißten Rohres Einfluss nehmen zu können ist es z. B. aus der JP 56105816 A und der JP 61180613 A bekannt, den Durchmesser am fertig geschweißten Rohr zu vermessen und die Messwerte für die Korrektur des Rohrdurchmessers zu verwenden. Bei den bekannten Verfahren wird das Rohr konventionell in einem einstufigen Prozessschritt verschweißt, d. h. es wird nach der Einformung des Bandes zu einem Schlitzrohr direkt fertig geschweißt.

Für die Ermittlung des Durchmessers des fertig geschweißten Rohres ist es bekannt, z. B. die Laser-Triangulation oder Ultraschall einzusetzen. Häufig wird aber auch noch mit einem Bandmaß der Umfang des Rohres gemessen und daraus der Durchmesser ermittelt.

Die ermittelten Messwerte dienen anschließend dazu Änderungen des Einformwinkels des Bandes oder des Auslaufwinkels des geschweißten Rohres (JP 61180613) vorzunehmen oder durch Verstellung der Versatzrolle (JP 56105816 A) den Durchmesser des geschweißten Rohres zu beeinflussen.

Nachteil aller bekannten Verfahren ist, dass der Durchmesser erst nach der Fertigschweißung des Rohres gemessen wird und erst dann die vorgenannten Korrekturen möglich sind. Das bis zur Korrektur des Durchmessers gefertigte möglicherweise sehr lange Rohr muss anschließend entweder sehr aufwändig nachgearbeitet oder gar verschrottet werden.

Aufgabe der Erfindung ist es, das Verfahren zur Herstellung geschweißter Schraubennahtrohre aus Stahl dahingehend zu verbessern, dass Abweichungen vom geforderten Rohrdurchmesser möglichst früh erkannt werden und bedarfsweise früh korrigierend eingegriffen werden kann.

Diese Aufgabe wird ausgehend vom Oberbegriff in Verbindung mit den kennzeichnenden Merkmalen des Anspruches 1 gelöst. Vorteilhafte Weiterbildungen sind Bestandteil von Unteransprüchen.

Der Vorteil der vorgeschlagenen Vorgehensweise liegt darin, dass gegenüber den bekannten Verfahren, bei denen erst das fertig geschweißte Rohr vermessen wird, bei dem erfindungsgemäßen Verfahren schon in einem sehr frühen Fertigungsstadium korrigierend in den Fertigungsprozess des Rohres eingegriffen und so etwaiger Ausschuss auf ein Minimum reduziert werden kann.

Die Messung des Rohr-Durchmessers erfolgt vorteilhaft direkt nach der Einformung zu einem Schlitzrohr in einem begrenzten Bereich um die Heftnahtschweißung, so dass etwaig notwendige Veränderungen im Rohrdurchmesser unmittelbar nach der Einformung erkannt und Korrekturen vorgenommen werden können.

Vorteilhaft erfolgt die Ermittlung des Rohr-Durchmessers in einem kontinuierlichen Vorgang während der Fertigung, so dass kontinuierlich nachgesteuert bzw. nachgeregelt werden kann. Der Durchmesser kann vorteilhaft berührungslos z. B. mittels Laser-Triangulation oder Ultraschall gemessen werden, es sind jedoch auch andere Messverfahren denkbar. Bei Abweichungen von den Toleranzvorgaben, kann durch Veränderungen des Einlaufwinkels des Bandes, der Höheneinstellung der Versatzrolle oder des Auslaufwinkels des geschweißten Rohres dessen Durchmesser beeinflusst bzw. korrigiert werden.

Weitere Merkmale, Vorteile und Einzelheiten der Erfindung ergeben sich aus der nachfolgenden Beschreibung.

Es zeigen:
- **Figur 1**: schematische Darstellung des zweistufigen Herstellungsverfahrens geschweißter Schraubennahtrohre,
- **Figur 2a**: wie Figur 1, jedoch als Detaildarstellung mit der erfindungsgemäßen Einrichtung zur Durchmesser-Messung,
- **Figur 2b**: Detail aus Figur 2a mit einer schematische Darstellung der Rohreinformung im Querschnitt
- **Figur 3**: schematische Darstellung der geometrischen Abhängigkeit des Rohrdurchmessers vom Einlaufwinkel und der Breite des Bandes,
- **Figur 4**: schematische Darstellung eines Querschnitts einer Heftnahtschweißung

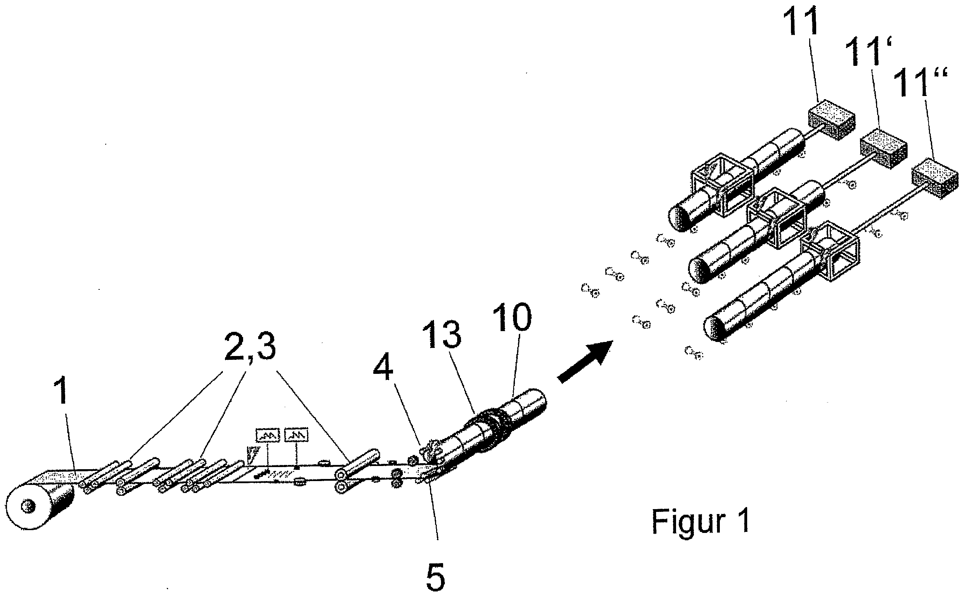

**Figur 1** zeigt eine schematische Darstellung des zweistufigen Herstellungsverfahrens geschweißter Schraubennahtrohre.

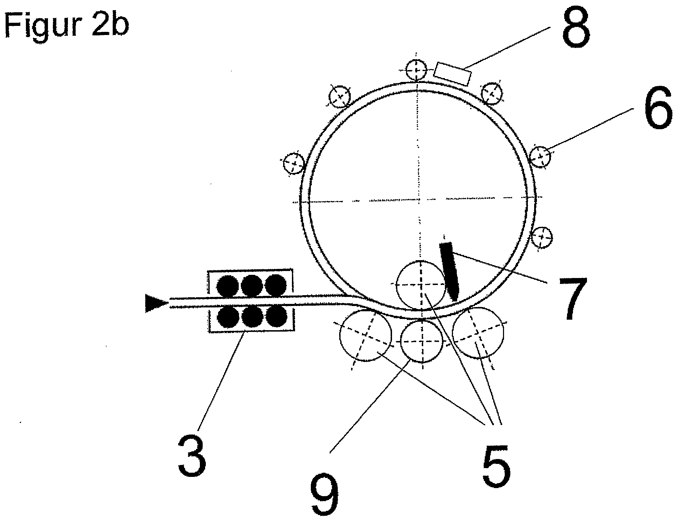

Dargestellt ist ein von einem Coil abgewickeltes Metallband 1, welches über Antriebs- und Richtwalzen 2 bzw. 3 zur Verformungseinheit 4 gelangt. Nach der Einformung zu einem Schlitzrohr und anschließendem Heften in einer Schweißeinheit 7 (siehe **Figur 2b**) wird das so hergestellte Rohr 10 anschließend auf die geforderte Kundenlänge mittels einer Trennvorrichtung 13 abgelängt und gelangt danach zu separaten Schweißstationen 11, 11', 11", in denen die Rohre 10 fertig geschweißt werden.

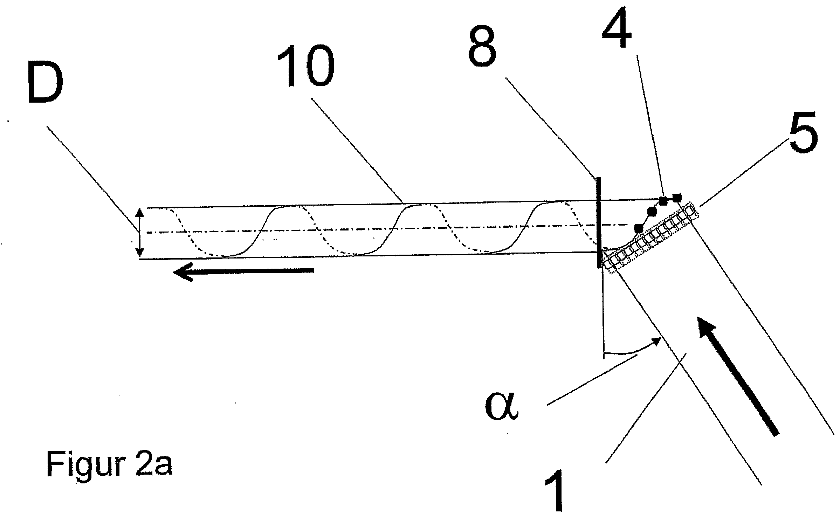

**Figur 2a** zeigt in einer Detaildarstellung von **Figur 1** die erfindungsgemäße Einrichtung zur Durchmesser-Messung, wobei für gleiche Teile gleiche Bezugszeichen verwendet werden. Das Metallband 1 läuft unter einem Winkel α in die Verformungseinheit 4 ein und wird dort zu einem Rohr 10 mit einem Durchmesser D geformt. Unmittelbar nach der Einformung des Metallbandes 1 zu einem Schlitzrohr ist eine Durchmesser-Messeinrichtung (8) angeordnet, die entweder das Schlitzrohr oder das Rohr 10 direkt hinter der Heftstelle vermisst.

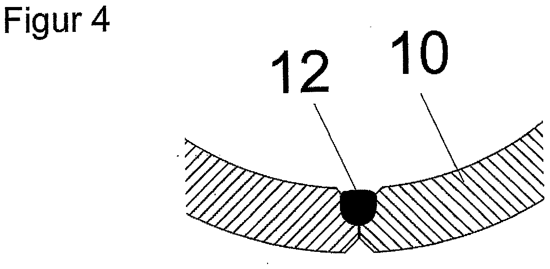

In **Figur 2b** ist in einer schematischen Darstellung die Verformungseinheit 4 aus **Figur 2a** mit der Durchmesser-Messeinrichtung 8 näher dargestellt. Die Verformungseinheit 4 besteht aus einem 3-Rollenbalken-Biegesystem 5 mit äußerem Stützrollenkäfig 6, der Schweißeinheit 7 für die Heftnahtschweißung und der Durchmesser-Messeinrichtung 8. Eine schematische Darstellung einer Heftnahtschweißung 12 am Rohr 10 ist in **Figur 4** dargestellt.

Die Durchmesser-Messeinrichtung 8 ist erfindungsgemäß im Bereich des vollständig zu einem Schlitzrohr eingeformten Rohres 10 angeordnet. Mit einer im Bereich des 3-Rollenbalken-Biegesystems 5 angeordneten höhenverstellbaren Versatzrolle 9 kann ein Versatz der Bandkanten des Schlitzrohres unmittelbar vor dem Heften ausgeglichen werden. Auch kann mit Hilfe der Versatzrolle 9 der Rohrdurchmesser in gewissen Grenzen verändert werden.

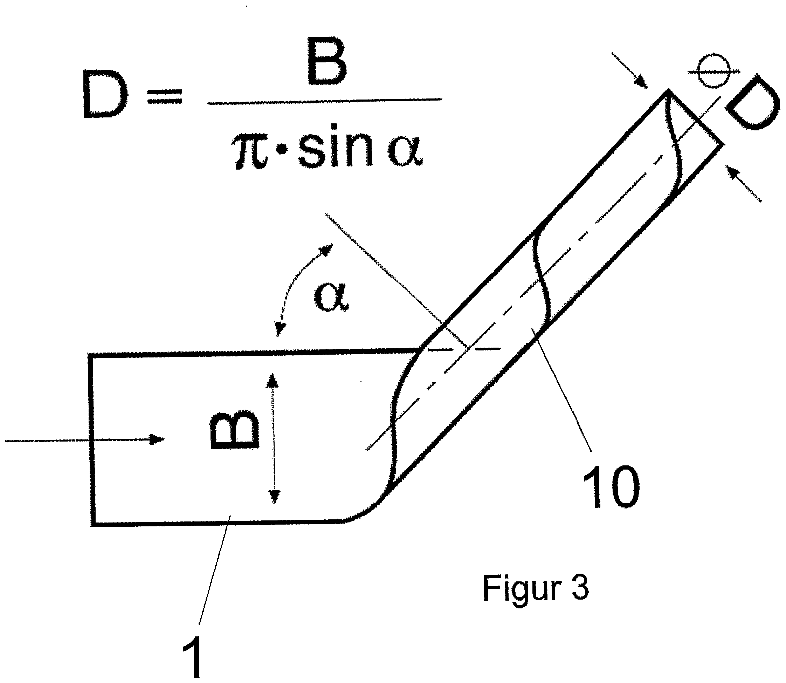

**Figur 3** zeigt in einer schematischen Darstellung die geometrische Abhängigkeit des Rohrdurchmessers D von dem Einlaufwinkel α und der Breite des einlaufenden Metallbandes 1.

Hierbei bestimmt der Winkel α zwischen einlaufendem Metallband 1 und eingeformtem Rohr 10 bei gleicher Bandbreite direkt den Durchmesser D des Rohres 10. Durch Veränderung des Winkels α kann bei Abweichungen vom Soll-Durchmesser während der Fertigung eine Korrektur vorgenommen werden. Diese kann durch Verstellung des Bandeinlaufwinkels oder durch eine Veränderung des Auslaufwinkels des geschweißten Rohres erfolgen.

Mit der erfindungsgemäßen Anordnung der Durchmesser-Messeinrichtung 8 im Bereich der Heftschweißung der Verformungseinheit 4 wird der Durchmesser des Rohres 10 zu einem frühestmöglichen Zeitpunkt ermittelt, wobei bei Abweichungen vom Sollwert der Durchmesser D des Rohres 10 über eine hier nicht dargestellte Steuer- bzw. Regeleinheit direkt nachjustiert werden kann.

**Bezugszeichenliste**

| **Nr.** | **Bezeichnung** |
|---|---|
| 1 | Metallband |
| 2, 3 | Antriebs- bzw. Richtwalzen |
| 4 | Verformungseinheit |
| 5 | 3-Rollenbalken-Biegesystem |
| 6 | Stützrollenkäfig |
| 7 | Schweißeinheit zum Heftnahtschweißen |
| 8 | Durchmesser-Messeinrichtung |
| 9 | Versatzrolle |
| 10 | heftnahtgeschweißtes Rohr |
| 11, 11', 11" | Fertigschweißstationen |
| 12 | Heftnahtschweißung |
| 13 | Trennvorrichtung |
| D | Rohrdurchmesser |
| α | Einlaufwinkel |
| B | Breite des Metallbandes |

## Patentansprüche

1. Verfahren zur Herstellung geschweißter Schraubennahtrohre mit optimierter Rohrgeometrie, wobei ein Metallband mittels einer Verformungseinheit schraubenlinienförmig zu einem Schlitzrohr eingeformt wird und die zusammenlaufenden Bandkanten zusammengeschweißt werden und wobei die vollständige Verschweißung der Bandkanten in einem zweistufigen Schritt erfolgt mit einer Heftnahtschweißung als erstem Schritt unmittelbar nach der Einformung als Schlitzrohr und einer sich daran anschließenden Fertigschweißung als zweitem Schritt, **dadurch gekennzeichnet, dass** ein am Rohr ermittelter Ist-Durchmesser mit einem vorgegebenen Soll-Durchmesser verglichen und eine etwaige außerhalb einer Toleranzschwelle liegende Abweichung zu einer Korrektur des Ist-Rohrdurchmessers verwendet wird, wobei die Messung des Rohrdurchmessers nach der vollständigen Einformung zu einem Schlitzrohr und vor der Fertigschweißung, und zwar vor, im Bereich oder in Fertigungsrichtung gesehen direkt hinter der Stelle der Heftnahtschweißung erfolgt.

2. Verfahren nach Anspruch 1,
**dadurch gekennzeichnet,**
**dass** die Messung berührungslos erfolgt.

3. Verfahren nach Anspruch 1 und 2,
**dadurch gekennzeichnet,**
**dass** die Messung kontinuierlich erfolgt.

4. Verfahren nach Anspruch 1 und 2,
**dadurch gekennzeichnet,**
**dass** die Messung mittels des Laser-Triangulationsverfahrens erfolgt.

5. Verfahren nach Anspruch 1 und 2,
**dadurch gekennzeichnet,**
**dass** die Messung mittels Ultraschall erfolgt.

6. Verfahren nach einem der Ansprüche 1 - 4,
**dadurch gekennzeichnet,**
**dass** der ermittelte Messwert als Stellgröße für eine Steuerung oder Regelung des Rohrdurchmessers verwendet wird.

7. Verfahren nach Anspruch 6,
**dadurch gekennzeichnet,**
**dass** der Rohrdurchmesser durch Veränderung des Einlaufwinkels des Bandes und/oder des Auslaufwinkels des heftnahtgeschweißten Rohres und/oder der Höheneinstellung der Versatzrolle gesteuert oder geregelt wird.

8. Einrichtung zur Durchführung des Verfahrens nach Anspruch 1 bis 7, mit einer Verformungseinheit (4), in der ein Metallband (1) zu einem Schlitzrohr eingeformt wird, und einer Schweißeinheit (7) zum Heften des Rohres (10) und einer Fertigschweißstation (11, 11', 11") zum Fertigschweißen des Rohres (10), **gekennzeichnet durch** eine Einrichtung (8) zur Messung des Durchmessers (D) des Rohres (10), wobei die Durchmesser-Messeinrichtung (8) so angeordnet ist, dass entweder das vollständig eingeformte Schlitzrohr oder das nur heftnahtgeschweißte Rohr (10) vor, im Bereich oder in Fertigungsrichtung gesehen direkt hinter der Stelle der Heftnahtschweißung vermessen wird.

9. Einrichtung nach Anspruch 8,
**dadurch gekennzeichnet,**
**dass** die Durchmesser-Messeinrichtung (8) ein Laser ist.

10. Einrichtung nach Anspruch 8,
**dadurch gekennzeichnet,**
**dass** die Durchmesser-Messeinrichtung (8) ein Ultraschallgerät ist.

11. Einrichtung nach einem der Ansprüche 8 bis10,
**dadurch gekennzeichnet,**
**dass** die Durchmesser-Messeinrichtung (8) mit einer Steuerungs- oder Regeleinheit zur Nachjustierung des Durchmessers (D) des Rohres (10) verbunden ist.

## Claims

1. A method for producing welded helical seam pipes having an optimised pipe geometry, wherein a metal strip is helically shaped into an open seam pipe by means of a forming unit and the converging strip edges are welded together and wherein the full welding of the strip edges takes place in a two-stage step with tack welding as the first step immediately following the shaping as an open seam pipe and a subsequent final welding as a second step, **characterised in that** an actual diameter determined on the pipe is compared with a predetermined specified diameter and any deviation outside a tolerance threshold is used for correcting the actual pipe diameter, wherein the measurement of the pipe diameter takes place after the full shaping into an open seam pipe and before the final welding and, more precisely, in front of, in the region of, or, as seen in the production direction, directly behind the point of the tack welding.

2. A method according to Claim 1,
**characterised in that**
the measurement takes place without contact.

3. A method according to Claim 1 and 2,
**characterised in that**
the measurement takes place continuously.

4. A method according to Claim 1 and 2,
**characterised in that**
the measurement takes place by means of the laser triangulation method.

5. A method according to Claim 1 and 2,
**characterised in that**
the measurement takes place by means of ultrasound.

6. A method according to one of Claims 1 - 4,
**characterised in that**
the determined measured value is used as a correcting variable for controlling or regulating the pipe diameter.

7. A method according to Claim 6,
**characterised in that**
the pipe diameter is controlled or regulated by altering the input angle of the strip and/or the output angle of the tack welded pipe and/or the vertical adjustment of the offset roller.

8. A device for carrying out the method according to Claim 1 to 7, having a forming unit (4) in which a metal strip (1) is shaped into an open seam pipe, and a welding unit (7) for tacking the pipe (10) and a final welding station (11, 11', 11") for final welding of the pipe (10), **characterised by** a device (8) for measuring the diameter (D) of the pipe (10), wherein the diameter measuring device (8) is arranged so that either the fully shaped open seam pipe or the merely tack welded pipe (10) is measured in front of, in the region of, or, as seen in the production direction, directly behind the point of the tack welding.

9. A device according to Claim 8
**characterised in that**
the diameter measuring device (8) is a laser.

10. A device according to Claim 8,
**characterised in that**
the diameter measuring device (8) is an ultrasound device.

11. A device according to one of Claims 8 to 10,
**characterised in that**
the diameter measuring device (8) is connected to a control or regulating unit for readjusting the diameter (D) of the tube (10).

## Revendications

1. Procédé pour la production de tubes soudés avec cordon de soudure hélicoïdal et présentant une géométrie de tube optimisée, dans lequel on met en forme une bande de métal suivant une ligne hélicoïdale pour donner un tube fendu, au moyen d'une unité de mise en forme, et les arêtes de la bande qui se rejoignent sont soudées ensemble, et dans lequel la totalité du soudage des arêtes de la bande a lieu dans une étape a deux étages avec soudage d'un cordon de soudure provisoire à titre de première étape directement après la mise en forme qui donne un tube fendu, et avec soudage final à la suite de celui-ci à titre de seconde étape,
**caractérisé en ce que** l'on compare un diamètre réel déterminé sur le tube à un diamètre de consigne prédéterminé et on utilise un écart éventuel qui tombe à l'extérieur d'un seuil de tolérance pour une correction du diamètre réel du tube, dans lequel la mesure du diamètre du tube a lieu après mise en forme complète pour donner un tube fendu et avant le soudage final et ceci avant, dans la région ou directement derrière, vu en direction de fabrication, l'emplacement du soudage du cordon de soudure provisoire.

2. Procédé selon la revendication 1,
**caractérisé en ce que** la mesure a lieu sans contact.

3. Procédé selon la revendication 1 et 2,
**caractérisé en ce que** la mesure a lieu en continu.

4. Procédé selon la revendication 1 et 2,
**caractérisé en ce que** la mesure a lieu au moyen de la procédure de triangulation au laser.

5. Procédé selon la revendication 1 et 2,
**caractérisé en ce que** la mesure a lieu au moyen d'ultrasons.

6. Procédé selon l'une des revendications 1 à 4,
**caractérisé en ce que** la valeur de mesure déterminée est utilisée à titre de valeur de consigne pour une commande ou une régulation du diamètre du tube.

7. Procédé selon la revendication 6, **caractérisé en ce que** le diamètre du tube est commandé ou régulé par modification de l'angle d'entrée de la bande et/ou de l'angle de sortie du tube soudé avec cordon de soudure provisoire et/ou modification du réglage en hauteur du rouleau de décalage.

8. Système pour la mise en oeuvre du procédé selon la revendication 1 à 7, comprenant une unité de mise en forme (4), dans laquelle une bande de métal (1) est mise en forme pour donner un tube fendu, et une unité de soudage (7) pour effectuer un cordon de soudure provisoire du tube (10) et une station de soudage final (11, 11', 11") pour le soudage final du tube (10),
**caractérisé par** un dispositif (8) pour la mesure du diamètre (D) du tube (10), le dispositif de mesure de diamètre (8) étant agencé de telle façon que soit le tube fendu entièrement mis en forme, soit le tube soudé avec un cordon de soudure provisoire (10) est mesuré avant, dans la zone, ou directement derrière, vu dans la direction de fabrication, l'emplacement du soudage par cordon de soudure provisoire.

9. Système selon la revendication 8,
**caractérisé en ce que** le dispositif de mesure de diamètre (8) est un laser.

10. Système selon la revendication 8,
**caractérisé en ce que** le dispositif de mesure de diamètre (8) est un appareil à ultrasons.

11. Système selon l'une des revendications 8 à 10,
**caractérisé en ce que** le dispositif de mesure de diamètre (8) est relié à une unité de commande ou de régulation pour réajuster le diamètre (D) du tube (10).
